# EUROPÄISCHE PATENTSCHRIFT

(11) **EP 1 138 222 B1**
(45) Veröffentlichungstag und Bekanntmachung des Hinweises auf die Patenterteilung: **14.11.2007**
(21) Anmeldenummer: 01102078.1
(22) Anmeldetag: 31.01.2001
(51) Int. Cl.: A46B 3/08, A46D 3/08, A46B 9/04

(54) **Bürstenkopf und Verfahren zur Herstellung eines solchen Bürstenkopfes**
Brush head and method for its production
Tête de brosse et procédé pour la fabrication de cette tête de brosse

(30) Priorität: 25.03.2000 DE 10015062
(43) Veröffentlichungstag der Anmeldung: 04.10.2001
(60) Teilanmeldung: 06025913.2
(73) Patentinhaber: Braun GmbH, 61476 Kronberg (DE)
(72) Erfinder: Driesen, Georges, 61276 Weilrod (DE); Fritsch, Thomas, 65817 Eppstein (DE); Schwarz-Hartmann, Armin, 55234 Wendelsheim (DE)

(56) Entgegenhaltungen:
- WO-A-94/27467
- DE-A- 4 224 903
- DE-A- 19 519 291
- DE-A- 19 545 030

## Beschreibung

Die vorliegende Erfindung betrifft einen Bürstenkopf, insbesondere einen Zahnbürstenkopf, mit einem Borstenträger und daran festgelegten Borsten, wobei der Borstenträger eine langgestreckte Ausnehmung aufweist, in der eine Vielzahl von Borsten sitzen und ein langgestrecktes Borstenbüschel mit geschlossener, glatter Außenkontur bilden, die im wesentlichen der Kontur der langgestreckten Ausnehmung entspricht.

Die vorliegende Erfindung betrifft ferner ein Verfahren zur Herstellung eines solchen Bürstenkopfes, bei dem ein Borstenträger bereitgestellt wird und eine Vielzahl von Borsten an diesem befestigt werden.

Borstenbüschel können in verschiedener Weise an Borstenträgern von Zahnbürsten befestigt werden. Ein erstes Verfahren besteht darin, daß ein Borstenbüschel in U-Form gelegt wird und mit Hilfe eines kleinen Ankerplättchens aus Metall, das zwischen die Schenkel des U-förmigen Borstenbüschels gelegt wird, in eine im Borstenträger vorgesehene Sacklochbohrung gestopft und dort befestigt wird. Das Ankerplättchen liegt über der U-förmigen Biegung des Borstenbüschels und gräbt sich in gegenüberliegende Seitenwände der Sacklochbohrung ein. Mit diesem sogenannten Ankerstopfverfahren können jedoch überwiegend Borstenbüschel einfacher Geometrien, insbesondere mit kreisförmigem oder quadratischem Querschnitt befestigt werden (WO 94/27467, DE 19519291, DE 4224903).

Ein zweites Verfahren zur Festlegung der Borsten an dem Borstenträger besteht darin, daß die Borstenbüschel durch Umspritzen mit dem Material des Borstenträgers festgelegt werden (vgl EP 0 678 368 B1). Mit dieser Methode können Borstenbüschel praktisch beliebigen Querschnitts und auch beliebiger Größe an dem Borstenträger befestigt werden.

Gemäß einer dritten Methode werden die Borstenbüschel in eine Kunststofflochplatte eingeführt, die dem freien Ende der Borstenbüschel gegenüberliegenden Borstenenden mittels eines Prägestempels auf der Unterseite der Lochplatte miteinander verschweißt und wird die Lochplatte mit den daran befestigten Borstenbüscheln mit Material umspritzt, verklebt oder auch lösbar an einem Borstenträger befestigt (vgl WO 99/55194). Auch hierbei sind Borstenbüschel mit variablen Querschnittsgeometrien erhältlich, allerdings ist das thermische Verschweißen der Borsten ebenso wie das zuvor beschriebene Eingießen bzw. Umspritzen relativ aufwendig und daher kostenintensiv im Vergleich zum Ankerstopfverfahren.

Ein Zahnbürstenkopf der eingangs genannten Art ist aus der US 5,446,940 bekannt, bei dem der Borstenträger mehrere langlochartige Ausnehmungen aufweist, in denen jeweils ein langgestrecktes Borstenbüschel mit geschlossener, glatter Außenkontur sitzt. Da es jedoch schwierig ist, die langlochartigen Ausnehmungen mit Borsten zu befüllen und diese alle in eine senkrechte Ausrichtung zu bringen, ist in der US 5,446,940 vorgeschlagen, die langlochartige Ausnehmung durch mehrere in Reihe hintereinander angeordnete Löcher mit kreisförmigem oder rechteckigem Querschnitt zu ersetzen und in jedem dieser Löcher ein separates Borstenbüschel zu befestigen. Hierdurch wird jedoch kein einzelnes langgestrecktes Borstenbüschel mit geschlossener Außenkontur, sondern nur noch eine Reihe singulärer, hintereinander angeordneter Borstenbüschel erhalten. Auch aus der DE 195 45 030 A1 ist eine Zahnbürste mit derartigen länglichen Borstenbüscheln bekannt.

Auch ist es bereits bekannt, mehrere kreisförmige Borstenbüschel in Reihe hintereinander anzuordnen, wobei die äußeren Borstenbüschel nach innen geneigt sein können. Um eine ungehinderte Bewegung der einzelnen Borstenbüschel zu ermöglichen, sollen nach dieser Druckschrift alle Borstenbüschel voneinander großzügig beabstandet sein. Ein gegenseitiges Abstützen der einzelnen Borstenbüschel soll verhindert werden.

Der vorliegenden Erfindung liegt die Aufgabe zugrunde, einen verbesserten Bürstenkopf der eingangs genannten Art sowie ein verbessertes Verfahren der eingangs genannten Art zu dessen Herstellung zu schaffen, die aus dem Stand der Technik bekannte Nachteile vermeiden und letzteren in vorteilhafter Weise weiterbilden. Insbesondere soll die Herstellbarkeit eines Bürstenkopfes mit einem langgestreckten Borstenbüschel mit geschlossener Kontur verbessert und kosteneffizienter gestaltet werden.

Bei einem Bürstenkopf der eingangs genannten Art wird diese Aufgabe erfindungsgemäß dadurch gelöst, daß die langgestreckte Ausnehmung mittels zumindest einer Querwand in mehrere Segmente unterteilt ist, in jedem der Segmente ein separates Borstenbüschel sitzt und die zumindest eine Querwand derart ausgebildet ist, daß die separaten Borstenbüschel ineinander übergehen und gemeinsam das langgestreckte Borstenbüschel mit geschlossener, glatter Außenkontur bilden.

Es sind also keine vollständig separaten, lediglich in Reihe angeordneten Einzelbüschel vorgesehen. Die Borstenbüschel sind an ihren Befestigungsenden separat zusammengefaßt und befestigt, zu ihren freien Enden hin, mit denen die Zähne geputzt werden, laufen die Borsten zusammen, so daß sie ein gemeinsames, langgestrecktes Borstenbüschel bilden und die Trennung in separate Borstenbüschel nicht mehr sichtbar ist. Dies ist für die Putzwirkung und das Verschleißverhalten der Bürsten wichtig.

Hierzu ist die langlochartige Ausnehmung derart ausgebildet, daß jedes Segment gegenüberliegende, von der zumindest einen Querwand verbundene Seitenwände besitzt, die symmetrisch zur Längsachse der langlochartigen Ausnehmung insbesondere parallel zueinander verlaufen. Die Seitenwände aneinander angrenzender Segmente gehen kontinuierlich bzw. stetig und lediglich von der Querwand unterbrochen ineinander über. Die Querwände geben der Befestigung der Borsten Stabilität gegenüber einer Bewegung der Borsten in Längsrichtung der Ausnehmung. Sie erleichtern eine Befestigung der Borsten nach dem herkömmlichen Ankerstopfverfahren wesentlich bzw. sind unter Umständen je nach Geometrie der Ausnehmung sogar Voraussetzung für die Anwendung dieses Verfahrens.

In Weiterbildung der Erfindung können die Borsten eines jeden separaten Borstenbüschels U-förmig in dem jeweiligen Segment sitzen und von einem in dem jeweiligen Segment verankerten, vorzugsweise plattenförmigen Anker gehalten sein. Der Anker kann sich zwischen den Schenkeln der U-förmig gebogenen Borsten über deren Verbindungsabschnitte erstrecken und diese am Boden der langlochförmigen Ausnehmung halten. Die Borsten brauchen also nicht eingegossen, eingeklebt oder eingeschweißt zu werden. Sie können mit einem separaten Anker form- und kraftschlüssig an dem Borstenträger verankert sein. Ein derart ausgebildeter Bürstenkopf ist gegenüber herkömmlichen Bürstenköpfen mit langgestreckten Borstenbüscheln beträchtlich kostengünstiger herstellbar.

Die in den jeweiligen Segmenten vorgesehenen Anker zur Verankerung der Borstenbüschel können verschieden angeordnet sein. Gemäß einer bevorzugten Ausführung der Erfindung erstrecken sich die Anker im wesentlichen quer zur Längsachse der langlochartigen Ausnehmung, also im wesentlichen oder fast parallel zu der jeweils benachbarten Querwand des jeweiligen Segments. Vorzugsweise schließt der Anker zur jeweils benachbarten Querwand einen Winkel von weniger als 30 Grad ein. Die Längsachse der langlochartigen Ausnehmung ist im Kontext der vorliegenden Erfindung nicht zwangsweise gerade, vielmehr kann die Längserstreckung der langlochartigen Ausnehmung an die Gegebenheiten des jeweiligen Bürstenkopfes angepaßt sein, insbesondere einen gekrümmten oder geknickten Verlauf haben, so daß zwischen dem Anker und der jeweils benachbarten Querwand des jeweiligen Segments ein Winkel eingeschlossen sein kann.

Durch die Ausrichtung der Anker im wesentlichen quer zur Längsachse der langlochartigen Ausnehmung können sich die Borstenbüschel in dem jeweiligen Segment dessen Kontur bestmöglich anpassen. Die in den verschiedenen Segmenten verankerten Büschel bilden besonders vorteilhaft die gewünschte geschlossene Kontur des langgestreckten Borstenbüschels.

Die zumindest eine Querwand in der langlochartigen Ausnehmung kann in verschiedener Art und Weise ausgebildet sein. Eine bevorzugte Ausführung der Erfindung besteht darin, daß als Querwand ein separat ausgebildeter Quersteg vorgesehen ist, der am Borstenträger verankert ist. Vorzugsweise kann ein dünner Metallsteg vorgesehen sein, der in gegenüberliegenden Seitenwänden der langlochartigen Ausführung verankert ist. Insbesondere kann als Querwand ein Ankerdraht bzw. eine Ankerplatte in die langlochartige Ausnehmung eingeschossen sein, wie sie üblicherweise zur Befestigung der Borsten verwendet wird. Um als Querwand zu dienen, wird die Ankerplatte oder eine vergleichbare Platte jedoch vorab ohne Borsten in die langlochartige Ausnehmung eingebracht, so daß anschließend das jeweilige Borstenbüschel in das bereits entstandene Segment eingebracht werden kann. Die Höhe der Querwände vom Boden der langlochartigen Ausnehmung kann sich von der Höhe der Anker, mit denen die Borstenbüschel verankert sind, unterscheiden.

Um die Beabstandung der einzelnen Borstenbüschel bereits an ihren befestigungsseitigen Enden so gering wie möglich zu halten, beträgt die Dicke der zumindest einen Querwand vorzugsweise weniger als 0,5 mm, insbesondere 0,3 mm oder weniger. Gemäß einer bevorzugten Ausführung der Erfindung besitzt die Querwand eine Dicke im Bereich von etwa 0,15 bis 0,3 mm. Hierdurch kann ein langgestrecktes Borstenbüschel mit großer Dichte und Geschlossenheit erreicht werden. Trotz der geringen Dicke der aus Metall bestehenden Querwand, bietet diese eine ausreichende Stabilität zur Verankerung der Borstenbüschel mittels des Ankerstopfverfahrens in den Segmenten.

Um ein Abreißen bzw. Abknicken der Borsten beim Einstopfen in die Segmente zu verhindern, ist die Querwand frei von scharfen Kanten ausgebildet. Insbesondere ist die zur Außenseite der langlochartigen Ausnehmung hin gerichtete Oberkante der Querwand abgerundet. Die Querwand kann auch insgesamt einen ovalen bzw. elliptischen Querschnitt besitzen.

Die zumindest eine Querwand ist insbesondere keilförmig ausgebildet. Ihr Querschnitt verjüngt sich vom Boden der langlochartigen Ausnehmung zur Außenseite hin. Es kann eine einzige Seite der Querwand zur Senkrechten auf die Oberseite des Borstenträgers geneigt sein. Es können auch beide Seiten der Querwand entsprechend geneigt sein oder bei verschiedenen Querwänden auch Kombinationen der oben genannten Lösungen vorkommen.

In Weiterbildung der Erfindung können außenliegende Segmente der langlochartigen Ausnehmung insgesamt nach innen hin zu einem mittleren Segment geneigt sein. Bei dieser Ausführung sind also nicht nur innere Wandungen der äußeren Segmente, das heißt die jeweiligen Seiten der zugehörigen Querwand, sondern auch die stirnendseitigen Wände der langlochartigen Ausnehmung sowie gegebenenfalls der Boden der langlochartigen Ausnehmung in diesem Segment geneigt angeordnet, so daß die darin aufgenommenen Borstenbüschel sich zu dem mittleren Borstenbüschel hin neigen. Hierdurch wird eine Auffächerung der in den äußeren Segmenten befestigten Borstenbüschel vermieden und eine große Dichte auch in diesem Bereich erreicht. In einer vorteilhaften Weitergestaltung sind die Borstenbüschel der einzelnen Segmente mit unterschiedlichen Winkeln oder Richtungen bezogen auf die Senkrechte zur Oberseite geneigt. Bei dieser Konfiguration wird die Fläche der Bürstenscheibe optimal ausgenutzt, da bei herkömmlichen Bestopfungen mit getrennten Löchern die Anzahl der Borstenbüschel deutlich geringer ist.

Im Hinblick auf eine einfache Herstellbarkeit ist jedoch die zuvor beschriebene Ausführung mit nur geneigten Wänden der Querwand bevorzugt, da sich die Ausformung entsprechender Spritzgußwerkzeuge einfacher gestaltet.

In Weiterbildung der Erfindung können die Segmente im wesentlichen dieselbe Grundfläche besitzen, so daß das insgesamt langgestreckte Borstenbüschel eine gleichmäßige Dichte und Struktur erhält.

Um eine kaskadenartige Anordnung der Borsten innerhalb eines langgestreckten Borstenbüschels zu erreichen, können die Segmente verschiedene Grundflächen besitzen. In den verschiedenen Segmenten kann jeweils eine verschiedene Anzahl von Borsten sitzen. Es können in den verschiedenen Segmenten auch verschiedenartige Borsten sitzen. Es können Borsten unterschiedlicher Borstenlänge, Borstenstruktur, -material, -steifigkeit, -durchmesser oder -farbe verwendet werden.

Die Segmente können verschiedenartige Konturen besitzen. Insbesondere besitzen sie eine von der Kreisform verschiedene Kontur, vorzugsweise eine eckige Kontur mit zumindest zwei im wesentlichen parallelen, sich gegenüberliegenden Seiten. Die Segmente können gegebenenfalls auch eine elliptische oder ovale Form besitzen.

Bei einem Verfahren zur Herstellung eines Bürstenkopfes der eingangs genannten Art wird die oben genannte Aufgabe dadurch gelöst, daß in dem Borstenträger eine langlochartige Ausnehmung ausgebildet und darin ein langgestrecktes Borstenbüschel mit im wesentlichen geschlossener, glatter Außenkontur verankert ist, die im wesentlichen der Kontur der langlochartigen Ausnehmung entspricht, wobei in die langlochartige Ausnehmung zumindest eine Querwand eingebracht wird, die die Ausnehmung in mehrere Segmente unterteilt, wobei als Querwand ein dünner Quersteg vorzugsweise aus Metall verwendet wird, und dann in jedes Segment ein separates Borstenbüschel eingebracht wird.

Insbesondere werden die Borsten im Ankerstopfverfahren in die jeweiligen Segmente der langlochartigen Ausnehmung eingebracht. Die Borsten eines jeden Borstenbüschels werden U-förmig um einen Metallanker gelegt und in dieser U-Form mit dem Metallanker in das jeweilige Segment geschossen. Der Anker wird hierbei in die Seitenwände der langlochartigen Ausnehmung getrieben und darin verankert. Durch das Ankerstopfverfahren können die Borsten billig und mit hoher Geschwindigkeit an dem Borstenträger verankert werden. In Verbindung mit der Unterteilung der langlochartigen Ausnehmung kann kostengünstig und zeiteffizient ein langgestrecktes Borstenbüschel an dem Bürstenkopf vorgesehen werden.

Gemäß der Erfindung wird die langlochartige Ausnehmung zunächst ohne Querwand ausgebildet. Eine separate Querwand wird nachträglich eingebracht, insbesondere an gegenüberliegenden Seitenwänden der Ausnehmung verankert. Das nachträgliche Einbringen der Querwand bzw. der Querwände besitzt den Vorteil, daß für den Borstenträger und die Querwand unterschiedliche Materialien verwendet werden können, so daß unabhängig voneinander das jeweils passende Material für Borstenträger und Querwand verwendet werden kann. Insbesondere kann als Querwand eine Metallplatte im wesentlichen quer zur Längsachse der langlochartigen Ausnehmung in gegenüberliegende Seitenwände der Ausnehmung eingeschossen werden. Besonders vorteilhaft ist es, als Querwand einen Metallanker, wie er üblicherweise zur Befestigung der Borsten im Ankerstopfverfahren verwendet wird, vorab, das heißt vor dem Einbringen der Borsten in der langlochartigen Ausnehmung zu verankern.

Die Borstenbüschel werden nach der Ausbildung der Querwand in einem folgenden Verfahrensschritt in das jeweilige Segment eingebracht. In Weiterbildung der Erfindung können die Borstenbüschel jeweils in etwa kreisrunder Konfiguration in das jeweilige Segment eingebracht werden. Die Borstenbüschel passen sich dabei automatisch an die jeweilige Kontur des Segments an, das heißt, sie verändern ihre zunächst etwa kreisrunde Querschnittsform in die dem jeweiligen Segment entsprechende Querschnittsform. Insbesondere kann eine herkömmliche Borstenstopfmaschine verwendet werden, die für runde Borstenbüschel eingestellt sein kann. Dies vereinfacht den Herstellungsprozeß insofern als auf bereits vorhandene Ausrüstung zurückgegriffen wird. Die Büschelbefestigung kann mit höchster Geschwindigkeit erfolgen, es sind zum Beispiel bis zu 850 Borstenbüschel in der Minute möglich.

In vorteilhafter Weise können Borsten verwendet werden, die die Abnutzung zum Beispiel durch Verfärbung anzeigen. Solche Borsten liegen in der Regel nicht auf Spulen vor und könnten insoweit bei einer Befestigung mittels Eingießen oder Festschweißen nicht oder nur unter zusätzlichem Aufwand verwendet werden.

In vorteilhafter Weise können die langgestreckten Borstenbündel oder -büschel im Außenbereich der Zahnbürste so angeordnet sein, daß die Umhüllende im wesentlichen parallel zu der Kontur des Borstenträgers verläuft. Besonders bei oszillierenden/rotierenden Zahnbürsten wird das Verschleißverhalten bzw. Aufspleißen der Borstenbüschel deutlich reduziert. Des weiteren kann die Entfernung von Plaque im gingivalen Bereich gesteigert werden.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beiliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Die Erfindung wird nachfolgend anhand bevorzugter Ausführungsbeispiele und zugehöriger Zeichnungen näher erläutert. In den Zeichnungen zeigen:
- Figur 1: eine perspektivische Ansicht eines Bürstenkopfs für eine elektrische Zahnbürste gemäß einer bevorzugten Ausführung der Erfindung in einer schematischen Darstellung,
- Figur 2: eine Draufsicht auf den Bürstenkopf aus Figur 1,
- Figur 3: einen Schnitt durch den Bürstenkopf der vorhergehenden Figuren entlang der Linie E-E in Figur 2,
- Figur 4: eine Detailansicht des Bürstenkopfs in einer Schnittdarstellung entlang der Linie A-A in Figur 2, die eine Querwand zur Unterteilung der langlochartigen Ausnehmungen zeigt, wobei Borsten in der Darstellung weggelassen sind,
- Figur 5: Draufsichten auf langlochartige Ausnehmungen für langgestreckte Borstenfelder in ausschnittsweisen Darstellungen, wobei die Ansichten a, b, c und d mögliche Varianten der Kontur der Ausnehmung zeigen,
- Figur 6: eine Querwand zur Unterteilung der langlochartigen Ausnehmungen des Bürstenkopfs gemäß den vorhergehenden Figuren im Querschnitt, wobei die Ansichten a, b und c verschiedene Querschnittsformen gemäß verschiedenen Ausführungen der Erfindungen zeigen,
- Figur 7: eine Draufsicht auf einen Bürstenkopf für eine elektrische Zahnbürste gemäß einer weiteren Ausführung der Erfindung, wobei Querwände zur Unterteilung der langlochartigen Ausnehmung einen sich keilförmig verjüngenden Querschnitt besitzen, wobei Querwände gemäß Fig. 4 eingesetzt werden. Die langlochartigen Ausnehmungen erstrecken sich im wesentlichen parallel an die Außenkontur der Bürstenscheibe.
- Figur 8: einen Schnitt durch den Bürstenkopf aus Figur 7 entlang der Linie F-F in Figur 7, und
- Figur 9: eine Schnittansicht ähnlich Figur 8, die den Bürstenkopf mit eingesetzten Borstenbüscheln zeigt.

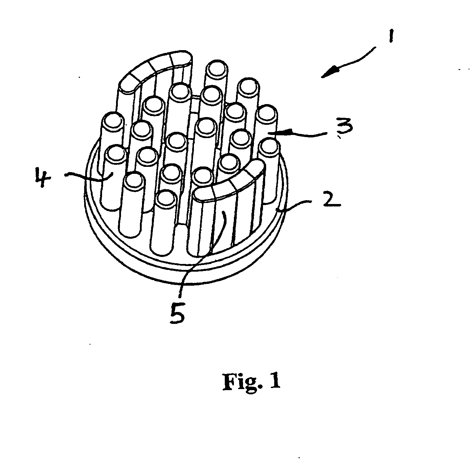

Der Bürstenkopf 1 gemäß der ersten Ausführung der Erfindung besitzt einen kreisplattenförmigen Bürstenträger 2, an dessen Flachseite eine Vielzahl von Borsten 3 jeweils zu Borstenbüscheln zusammengefaßt angeordnet sind. Wie Figur 1 zeigt, sind an dem Borstenträger 2 eine Vielzahl von singulären Borstenbüscheln 4 mit jeweils rundem Querschnitt sowie zwei langgestreckte Borstenbüschel 5 angeordnet.

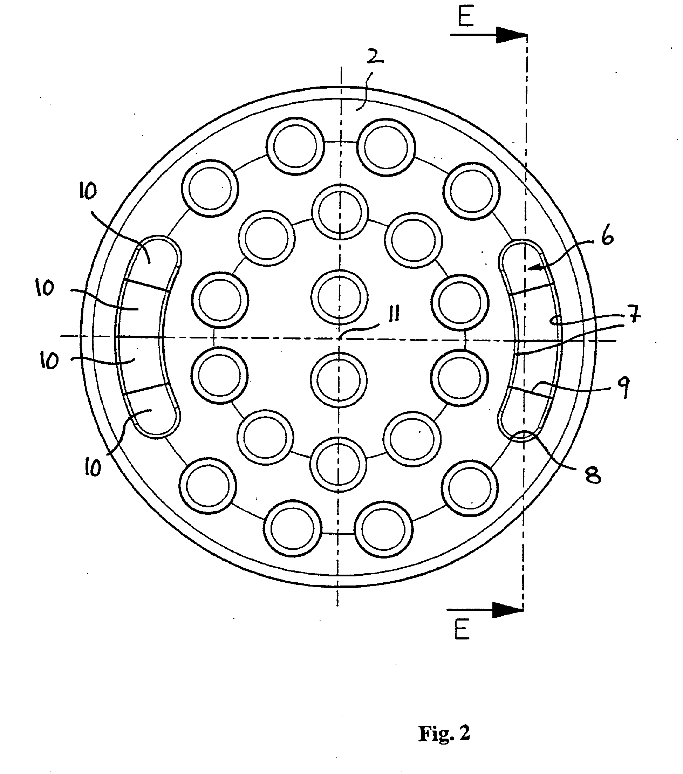

Die langgestreckten Borstenbüschel 5 besitzen jeweils eine bogenförmig gekrümmte Längsachse, die sich konzentrisch zur Mittelachse des kreisplattenförmigen Borstenträgers 2 erstreckt (vgl Figur 2).

Zur Befestigung jedes der beiden langgestreckten Borstenbüschel 5 ist eine langlochartige Ausnehmung 6 in dem Borstenträger 2 vorgesehen. Die langlochartige Ausnehmung 6 besitzt eine bogenförmig gekrümmte Längsachse, die sich konzentrisch zum Mittelpunkt des kreisplattenförmigen Borstenträgers 2 erstreckt. Dementsprechend erstreckt sich der langgestreckte Borstenbüschel 5 ebenfalls gekrümmt und konzentrisch um den Mittelpunkt des Borstenträgers 2.

Die langlochartige Ausnehmung 6 besitzt die Form einer Sacknut. Gegenüberliegende Seitenwände 7 erstrecken sich im wesentlichen parallel zueinander und parallel zur gekrümmten Längsachse der Ausnehmung 6. An den stirnseitigen Enden 8 der Ausnehmung 6 ist deren Wandung halbkreisförmig abgerundet (vgl Figur 2). Die Ausnehmung 6 ist durch drei Querwände 9 in vier Segmente 10 unterteilt, die jeweils etwa dieselbe Grundfläche besitzen. Die Querwände 9 erstrecken sich jeweils etwa senkrecht zur Längsachse der langlochartigen Ausnehmung 6. In der gezeigten Ausführung erstrecken sie sich dementsprechend radial zur Mittelachse 11 des Borstenträgers 2. Insbesondere für Rundkopfzahnbürsten können die Querwände aber auch einen Winkel bis zu ca. 30° zur Radialen zur Mittelachse aufweisen.

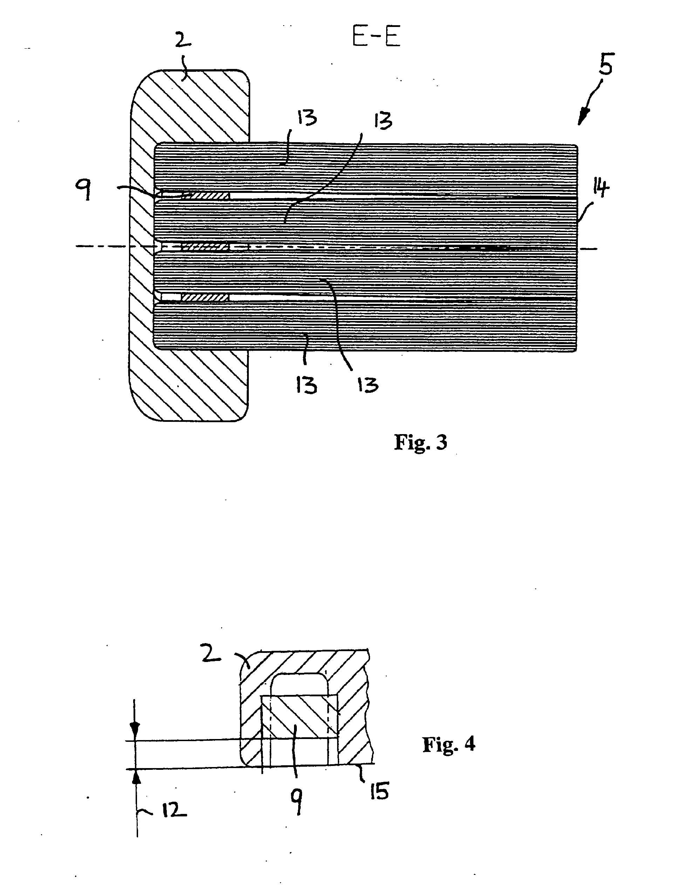

Als Querwände 9 sind dünne Metallplatten vorgesehen, wie sie als Anker zur Befestigung von Borsten im sogenannten Ankerstopfverfahren verwendet werden. Wie Figur 4 zeigt, sind die als Metallplatten ausgebildeten Querwände 9 in den Seitenwänden 7 der langlochartigen Ausnehmung 6 verankert. Der Borstenträger 2 ist aus Kunststoff spritzgegossen, so daß die Querwände 9, die etwas breiter als die langlochartige Ausnehmung 6 sind, in die Seitenwände 7 der Ausnehmung 6 eingeschlagen werden können und dort festgehalten werden. Wie Figur 4 zeigt, ist die Höhe der Querwände 9 geringer als die Tiefe der langlochartigen Ausnehmung 6. In der gezeigten Ausführung gemäß Figur 4 beträgt die Einschlagtiefe 12 der Oberkante der Querwand 9 etwa - grob gesprochen - ein Drittel der Tiefe der langlochartigen Ausnehmung 6, das heißt etwa das oberste Viertel bis Drittel der langlochartigen Ausnehmung 6 ist frei von Querwänden 9. Hierdurch kann ein dichtes und geschlossenes langgestrecktes Borstenbüschel erzielt werden, da die jeweiligen Borsten nur in den tieferliegenden Abschnitten der langlochartigen Ausnehmung 6 voneinander separiert werden.

Wie Figur 2 zeigt, erstrecken sich sowohl die Seitenwände 7 der langlochartigen Ausnehmung 6 als auch die Querwände 9 im wesentlichen senkrecht zur Oberfläche des Borstenträgers 2, an der die Borsten aus diesem austreten. Eine Neigung bzw. nicht senkrechte Anordnung kann auch realisiert werden (siehe z. B. Fig 9).

In jedes der Segmente 10 wird ein separates Borstenbüschel 13 eingebracht. In vorteilhafter Weise werden die jeweiligen Borstenbüschel 13 im Ankerstopfverfahren in die Segmente 10 der langlochartigen Ausnehmung 6 eingebracht. Die Borsten eines jeden Borstenbüschels 13 werden um einen Ankerdraht bzw. eine Ankerplatte aus Metall, die nicht näher dargestellt sind, U-förmig gebogen, so daß die Ankerplatte zwischen den Schenkeln der U-förmig gebogenen Borsten zu liegen kommt und sich über den Verbindungsabschnitt der U-Schenkel erstreckt. Die U-förmig gebogenen Borstenbüschel werden zusammen mit den Ankerplatten in die Segmente eingeschossen, wobei die Ankerplatten in die Seitenwände 7 der langlochartigen Ausnehmung 6 eindringen, ähnlich dem zuvor bereits beschriebenen Einbringen der Querwände 9. Die Ankerplatten werden hierdurch in den Seitenwänden verankert und halten den Verbindungsabschnitt der U-förmig um die Ankerplatten gelegten Borstenbüschel auf dem Boden der langlochartigen Ausnehmung 6. Die Ankerplatten werden dabei symmetrisch zwischen zwei Querwänden 9 in das jeweilige Segment 10 bzw. symmetrisch zwischen der jeweils äußersten Querwand 9 und dem stirnseitigen Ende 8 der langlochartigen Ausnehmung 6 in das jeweilige Segment 10 eingebracht. Die Ankerplatten erstrecken sich im wesentlichen senkrecht zur Längsachse der langlochartigen Ausnehmung 6, das heißt, im wesentlichen radial zur Mittelachse 11 des Borstenträgers 2. Nach dem Befestigen der Borstenbüschel 13 können die Bosten an ihren freien Enden zugeschnitten bzw. abgerundet werden. Abweichende Winkel von der Senkrechten zur Längsachse der langlochartigen Ausnehmung 6 zur Verhinderung eines Durchbruches des Ankers auf der Außenseite des Borstenträgers 2, sind zulässig.

Wie Figur 3 zeigt, gehen die Borstenbüschel 13 zu ihren freien Enden 14 hin ineinander über. In ihren zu den freien Enden 14 hin liegenden Bereichen bilden die vier Borstenbüschel 13 einen einzigen, gemeinsamen langgestreckten Borstenbüschel 5, der eine, wie Figur 1 zeigt, glatte und geschlossene Außenkontur besitzt, die im wesentlichen der Kontur der langlochartigen Ausnehmung 6 entspricht.

In der gezeigten Ausführung gemäß Figur 3 sind die vier Borstenbüschel 13 gleich ausgebildet. Es können jedoch auch unterschiedliche Borstenbüschel zum Beispiel mit unterschiedlich langen, unterschiedlich harten oder, wie vorher erwähnt, sonstwie andersartig ausgebildeten Borsten gebildet werden. Zum Beispiel könnte die Anordnung kaskadenartig getroffen sein, so daß zum Beispiel die beiden mittleren Borstenbüschel 13 länger oder kürzer als die beiden außenliegenden Borstenbüschel 13 sind.

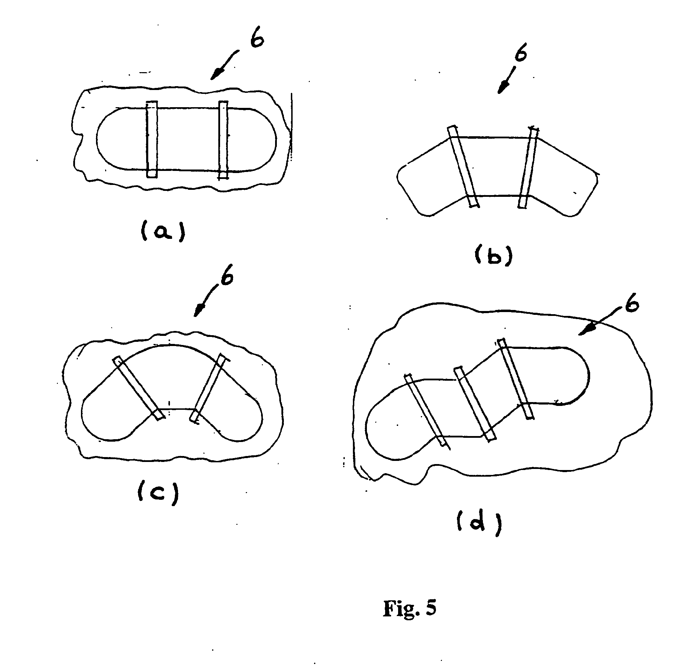

Die Kontur der langlochartigen Ausnehmung 6 ist nicht auf die in Figur 2 gezeigte beschränkt. Figur 5 zeigt Varianten möglicher Formen der langlochartigen Ausnehmung 6. Es können nahezu beliebige Konturen langgestreckter Borstenbüschel erreicht werden. Die in die einzelnen Segmente eingebrachten Borstenbüschel passen sich der Kontur des jeweiligen Segments an. Entsprechend der ineinander übergehenden Konturen der einzelnen Segmente wird ein einheitliches, geschlossenes Borstenbüschel mit einer glatten Außenkontur erreicht. Wie Figur 5 zeigt, werden die Querwände 9 vorzugsweise etwa so gesetzt, daß die Segmente ähnliche Querschnitte aufweisen. In einer Weiterbildung können die Querwände 9 im wesentlichen senkrecht zur jeweiligen Richtung der Längsachse der langlochartigen Ausnehmung 6 angeordnet werden. Vorzugsweise werden die Querwände 9 derart gesetzt, daß die sich ergebenden Segmente etwa dieselbe Grundfläche besitzen. Sie können jedoch auch derart gesetzt werden, daß die Flächen der Segmente 10 sich unterscheiden, zum Beispiel insbesondere um eine kaskadenartige Anordnung der Borsten innerhalb eines langgestreckten Borstenbüschels zu erreichen.

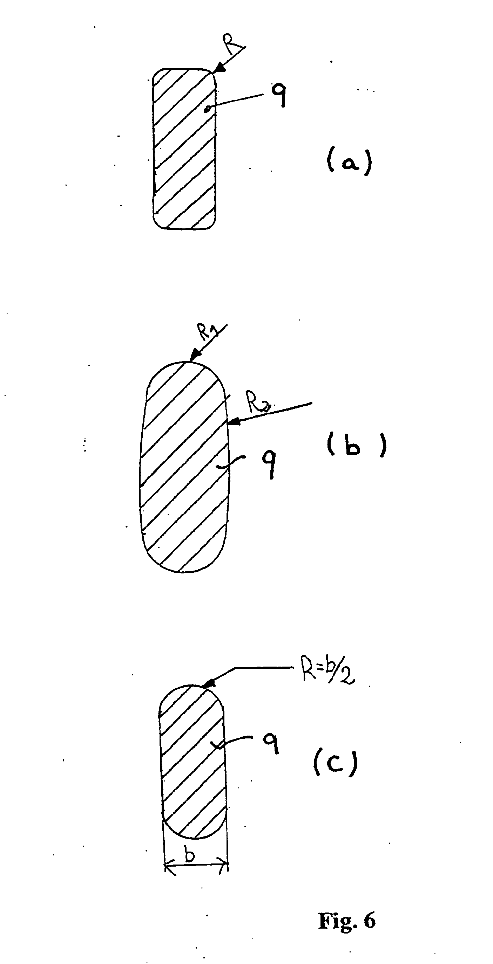

Um beim Einschießen der einzelnen Borstenbüschel 13 ein Abreißen der Borsten zu verhindern, ist die Oberkante der jeweiligen Querwand 9 vorzugsweise abgerundet. Wie Figur 6a zeigt, kann als Querwand ein Flachdraht mit gerundeten Kanten verwendet werden. Hierdurch wird auch ein Abscheuern der Borstenbüschel an den Kanten der Querwände 9 verhindert. Die Oberkante 15 der Querwände 9 können auch kuppelförmig verrundet sein, wie dies Figur 6c zeigt. Der Verrundungsradius entspricht dabei der halben Dicke der Querwand 9. Eine weitere bevorzugte Ausführung der Querwand 9 ist in Figur 6b gezeigt. Die Verrundung der Oberkante 15 geht in eine gewölbte Seitenfläche der Querwand 9 über, so daß die Querwand 9 insgesamt runde Querschnittskonturen besitzt. Die Querwand 9 kann elliptisch bzw. auch oval ausgebildet sein.

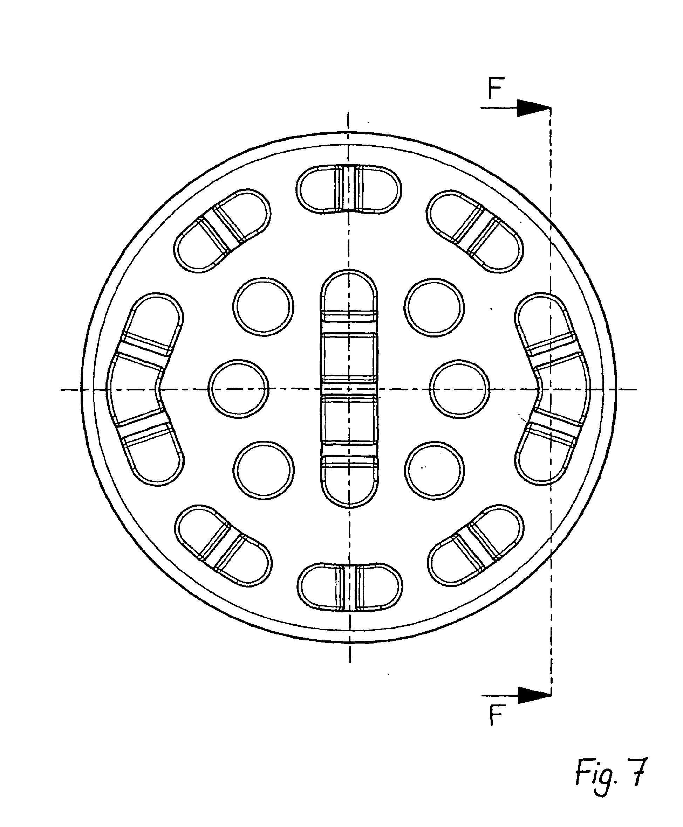

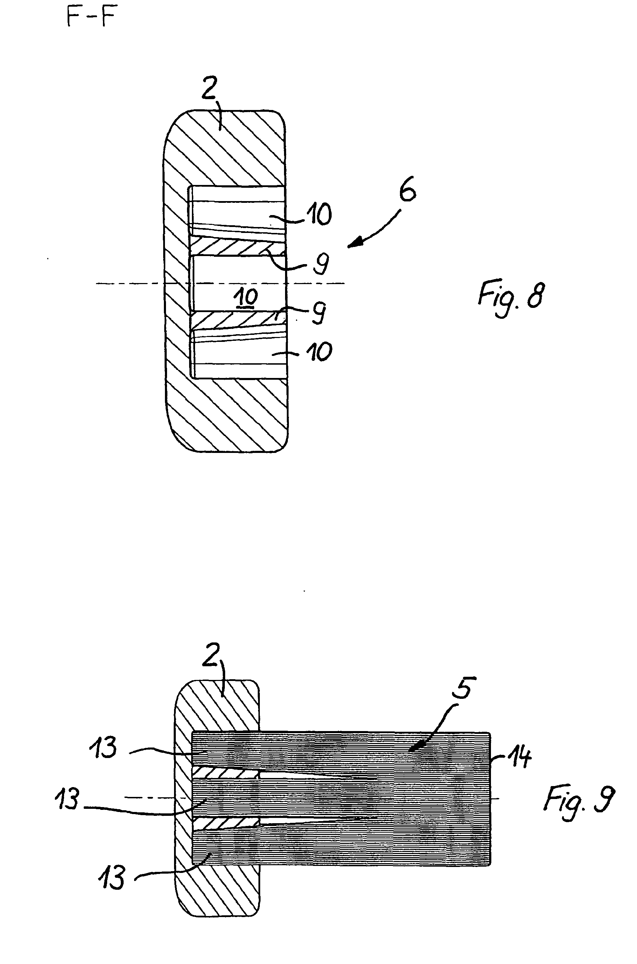

Eine weitere bevorzugte Ausführungsform eines erfindungsgemäßen Bürstenkopfs 1 zeigen die Figuren 7 bis 9. Der wie bei den vorherigen Ausführungsformen kreisplattenförmige Borstenträger 2 besitzt eine Mehrzahl von langlochartigen Ausnehmungen. Zwei gegenüberliegende langlochartige Ausnehmungen 6 besitzen eine beknickte Längsachse. Jede von ihnen ist durch zwei Querwände 9 in drei Segmente 10 unterteilt, wobei ein mittleres Segment 10 einen kreisbogenförmig geknickten Verlauf besitzt, während die beiden äußeren Segmente 10 eine geradlinige Längsachse besitzen (vgl Figur 7). Die Borstenbüschel, die für die Gingivalreinigung konzipiert sind, sind in zwei Segmente 10 mit einer Querwand 9 aufgeteilt.

Die Querwände 9 besitzen einen sich vom Boden der Ausnehmung 6 zur Oberseite des Borstenträgers 2 hin keilförmig verjüngenden Querschnitt. Insbesondere sind die die äußeren Segmente 10 begrenzenden Seiten der Querwände 9 geneigt zur Senkrechten auf die Oberseite des Borstenträgers 2, während die zu dem mittleren Segment 10 hin liegenden Seiten der Querwände 9 jeweils senkrecht auf die Oberseite des Borstenträgers 2 stehen. Die innenseiten der äußeren Segmente 10 sind geneigt, während die übrigen Wandungen der äußeren Segmente 10 senkrecht zur Oberseite des Borstenträgers 2 stehen. Die Neigung der Querwände kann größer sein als dargestellt. Die Oberkante der Querwände kann bevorzugt unterhalb der Oberfläche der Bürstenscheibe oder -träger liegen. Dies verstärkt den Eindruck eines durchgehenden Langlochbüschels.

Wie Figur 9 zeigt, gehen die drei Borstenbüschel 13 zu ihren freien Enden 14 hin ineinander über, so daß sie gemeinsam ein einzelnes, langgestrecktes Borstenbüschel mit einer geschlossenen, glatten Außenkontur bilden, die im wesentlichen der Außenkontur der langlochartigen Ausnehmung 6 entspricht.

Selbstverständlich kann die Kontur der langlochartigen Ausnehmungen bei den beiden zuletzt beschriebenen Ausführungen zum Beispiel entsprechend den in Figur 5 gezeigten Varianten variiert werden. Dies gilt auch für die Geometrie der Borstenträger.

Folgende konstruktiven Ausgestaltungen der Erfindung erweisen sich als besonders vorteilhaft:

Die Ankertiefe 12 des Bürstenkopfes beträgt mehr als 20 %, insbesondere ca. 0,5 mm, der Lochtiefe der Ausnehmung 6. Die maximale Breite der Querwand 9, gemessen entlang der Längsachse der langlochartigen Ausnehmung 6, beträgt ca. 0,5 mm. Die Oberkante der Querwände 9 der langlochartigen Ausnehmung 6 liegt bevorzugt unterhalb der Oberfläche der Borstenträger 2. Die langgestreckten Ausnehmungen 6 sind im Außenbereich der Bürste angeordnet. Die langgestreckten Ausnehmungen verlaufen im wesentlichen parallel zur Außenkontur des Borstenträgers 2. Es werden langgestreckte Ausnehmungen 6 unterschiedlicher Größe oder Segmentzahl verwendet. Die Borstenbüschel 13 mit unterschiedlichen Borsteneigenschaften werden von Vorteil in einem Kaskadenverfahren in die jeweiligen Segmente eingebracht. Die Borstenbüschel 13 der einzelnen Segmente 10 der langgestreckten Ausnehmungen 6 weisen unterschiedliche Neigungen zur Senkrechten auf der Oberseite des Borstenträgers 2 auf. Die verwendeten Anker zur Fixierung der Borstenbündel 13 in den Segmenten 17 können identisch zu den plattenförmigen Ankern 9, die die Querwände 9 bilden, sein. Bevorzugt haben die Borstenbüschel 13 der einzelnen Segmente 10 einer langgestreckten Ausnehmung 6 zur senkrechten auf der Oberseite des Borstenträgers 2 unterschiedliche Neigungswinkel, insbesondere können die Borstenbüschel 13 in unterschiedliche Richtungen zu der Senkrechten auf dem Borstenträger 2 geneigt sein.

## Patentansprüche

1. Bürstenkopf, insbesondere Zahnbürstenkopf, mit einem Borstenträger (2) und daran festgelegten Borsten (3), wobei der Borstenträger (2) wenigstens eine langlochartige Ausnehmung (6) aufweist, in der eine Vielzahl von Borsten aufgenommen sind und ein langgestrecktes Borstenbüschel (8) mit im wesentlichen geschlossener und/oder glatter Außenkontur bilden, die im wesentlichen der Kontur der langlochartigen Ausnehmung (6) entspricht, **dadurch gekennzeichnet, daß** die langlochartige Ausnehmung (6) mittels zumindest einer Querwand (9) in mehrere Segmente (10) unterteilt ist, wobei als Querwand (9) ein dünner, separater am Borstenträger (2) verankerter Quersteg vorzugsweise aus Metall vorgesehen ist, und in jedem der Segmente (10) ein separates Borstenbüschel (13) sitzt.

2. Bürstenkopf nach dem vorhergehenden Anspruch, wobei die Borsten (3) eines jeden separaten Borstenbüschels (13) U-förmig in dem jeweiligen Segment (17) sitzen und von einem in dem jeweiligen Segment (10) verankerten, insbesondere plattenförmigen Anker gehalten sind, der sich zwischen den Schenkeln der U-förmig gebogenen Borsten über deren Verbindungsabschnitte erstreckt.

3. Bürstenkopf nach dem vorhergehenden Anspruch, wobei sich die Anker im wesentlichen quer zur Längsachse der langlochartigen Ausnehmung (6) erstrecken, vorzugsweise zur jeweils benachbarten Querwand (9) einen Winkel von weniger als 30 Grad einschließen.

4. Bürstenkopf nach einem der vorhergehenden Ansprüche, wobei als Querwand (9) ein Ankerdraht, insbesondere eine Ankerplatte in den Borstenträger (2) eingebracht ist.

5. Bürstenkopf nach einem der vorhergehenden Ansprüche, wobei die Querwand (9) in gegenüberliegenden Seitenwänden (7) der langlochartigen Ausnehmung (6) verankert ist.

6. Bürstenkopf nach einem der vorhergehenden Ansprüche, wobei die Querwand (9) eine Dicke von weniger als 0,5 mm, vorzugsweise weniger als 0,4 mm, insbesondere im Bereich von etwa 0,15 bis 0,3 mm aufweist.

7. Bürstenkopf nach einem der vorhergehenden Ansprüche, wobei eine Oberkante (15) der Querwand (9) abgerundet ist und/oder die Querwand (9) einen ovalen und/oder elliptischen Querschnitt besitzt.

8. Bürstenkopf nach Anspruch 7, wobei gegenüberliegende Seiten der zumindest einen Querwand (9) zueinander geneigt sind, derart, daß die in benachbarten Segmenten (10) sitzenden Borstenbüschel (13) mit ihren freien Enden (14) aufeinander zu geneigt sind.

9. Bürstenkopf nach einem der vorhergehenden Ansprüche, wobei stirnseitige Wände (8) der Ausnehmung (6), vorzugsweise die zugehörigen stirnseitig äußeren Segmente (10) insgesamt nach innen zur Mitte der Ausnehmung (6) hin geneigt angeordnet sind.

10. Bürstenkopf nach einem der vorhergehenden Ansprüche, wobei die Segmente (10) im wesentlichen dieselbe Grundfläche besitzen.

11. Bürstenkopf nach einem der Ansprüche 1 bis 9, wobei die Segmente (10) verschiedene Grundflächen besitzen und in einem Kaskadenprozeß bestopft werden.

12. Bürstenkopf nach einem der vorhergehenden Ansprüche, wobei in den verschiedenen Segmenten (10) Borsten unterschiedlicher Eigenschaften sitzen.

13. Bürstenkopf nach einem der vorhergehenden Ansprüche, wobei die Segmente (10) eine von einem Kreis verschiedene Kontur, insbesondere eine im wesentlichen eckige Kontur mit zumindest zwei parallelen Seiten aufweisen.

14. Verfahren zur Herstellung eines Bürstenkopfs (1) nach einem der vorhergehenden Ansprüche, bei dem ein Borstenträger (2) bereitgestellt wird und eine Vielzahl von Borsten (3) an diesem befestigt werden, wobei in dem Borstenträger mindestens eine langlochartige Ausnehmung (6) ausgebildet und darin ein langgestrecktes Borstenbüschel (8) mit im wesentlichen geschlossener, glatter Außenkontur verankert ist, die im wesentlichen der Kontur der langlochartigen Ausnehmung (6) entspricht, **dadurch gekennzeichnet, daß** in die langlochartige Ausnehmung (6) zumindest eine Querwand (9) eingebracht wird, die die Ausnehmung in mehrere Segmente (20) unterteilt, wobei als Querwand (9) ein dünner Quersteg vorzugsweise aus Metall verwendet wird, und dann in jedes Segment (10) ein separates Borstenbüschel (13) eingebracht wird.

15. Verfahren nach Anspruch 14, bei dem wenigstens eine Metallplatte (9) im wesentlichen quer zur Längsachse der langlochartigen Ausnehmung (6) in gegenüberliegende Seitenwände (7) der Ausnehmung (6) eingeschossen bzw. verankert wird.

16. Verfahren nach einem der Ansprüche 14 oder 15, wobei die zumindest eine Querwand (9) derart geformt wird, daß gegenüberliegende Seiten der zumindest einen Querwand (9) zueinander geneigt sind, derart, daß die in benachbarten Segmenten (10) sitzenden Borstenbüschel (13) mit ihren freien Enden aufeinander zu geneigt sind.

17. Verfahren nach einem der Ansprüche 14 bis 16, wobei die Borsten (3) eines jeden Borstenbüschels (13) U-förmig umgebogen, in der U-Form in das jeweilige Segment gestopft und dort mit einem Anker verankert werden, insbesondere jedes Borstenbüschel (13) im wesentlichen U-förmig oberhalb des Borstenträgers (2) positioniert und mit dem Metallanker in dem jeweiligen Segment (10) verankert wird.

18. Verfahren nach einem der Ansprüche 14 bis 17, wobei eine stirnseitige Wand (8) der Ausnehmung (6) derart geformt wird, daß sie nach innen zur Mitte der Ausnehmung (6) hin geneigt ist.

19. Verfahren nach einem der Ansprüche 14 bis 18, wobei die Borstenbüschel (13) mit einer Borstenstopfmaschine zum Einbringen im wesentlichen kreisförmiger Borstenbüschel in die jeweiligen Segmente (10) eingebracht werden.

## Claims

1. Brush head, in particular a toothbrush head, having a bristle carrier (2) and bristles (3) secured thereon, the bristle carrier (2) having at least one slot-like recess (6) in which a multiplicity of bristles are accommodated and form an elongate cluster (8) of bristles with an essentially closed and/or smooth outer contour which corresponds essentially to the contour of the slot-like recess (6), **characterized in that** the slot-like recess (6) is subdivided into a plurality of segments (10) by means of at least one transverse wall (9), the transverse wall (9) provided being a thin, separate crosspiece which is anchored on the bristle carrier (2) and is preferably made of metal, and a separate cluster (13) of bristles is seated in each of the segments (10).

2. Brush head according to the preceding claim, in which the bristles (3) of each separate cluster (13) of bristles are seated in a U-shaped manner in the respective segment (10) and are retained by an in particular plate-like anchor which is anchored in the respective segment (10) and extends between the legs of the U-shaped bristles, over the connecting portions thereof.

3. Brush head according to the preceding claim, in which the anchors extend essentially transversely to the longitudinal axis of the slot-like recess (6), and preferably enclose an angle of less than 30 degrees in relation to the respectively adjacent transverse wall (9).

4. Brush head according to one of the preceding claims, in which an anchor wire, in particular an anchor plate, is introduced into the bristle carrier (2) as transverse wall (9).

5. Brush head according to one of the preceding claims, in which the transverse wall (9) is anchored in opposite side walls (7) of the slot-like recess (6).

6. Brush head according to one of the preceding claims, in which the transverse wall (9) has a thickness of less than 0.5 mm, preferably less than 0.4 mm, in particular in the range of approximately 0.15 to 0.3 mm.

7. Brush head according to one of the preceding claims, in which a top edge (15) of the transverse wall (9) is rounded and/or the transverse wall (9) has an oval and/or an elliptical cross section.

8. Brush head according to Claim 7, in which opposite sides of the at least one transverse wall (9) are inclined in relation to one another such that the clusters (13) of bristles seated in adjacent segments (10) have their free ends (14) inclined towards one another.

9. Brush head according to one of the preceding claims, in which end walls (8) of the recess (6), preferably the associated outer-end segments (10) as a whole, are inclined inwards in the direction of the centre of the recess (6).

10. Brush head according to one of the preceding claims, in which the segments (10) have essentially the same surface area.

11. Brush head according to one of Claims 1 to 9, in which the segments (10) have different surface areas and are tufted in a cascade process.

12. Brush head according to one of the preceding claims, in which bristles with different properties are seated in the different segments (10).

13. Brush head according to one of the preceding claims, in which the segments (10) have a non-circular contour, in particular an essentially angular contour with at least two parallel sides.

14. Method of producing a brush head (1) according to one of the preceding claims, in which a bristle carrier (2) is provided and a multiplicity of bristles (3) are fastened thereon, at least one slot-like recess (6) being formed in the bristle carrier, and the recess having anchored in it an elongate cluster (8) of bristles within an essentially closed, smooth outer contour which corresponds essentially to the contour of the slot-like recess (6), **characterized in that** at least one transverse wall (9) is introduced into the slot-like recess (6) and subdivides the recess into a plurality of segments (20), the transverse wall (9) used being a thin crosspiece, preferably made of metal, and then a separate cluster (13) of bristles is introduced into each segment (10).

15. Method according to Claim 14, in which at least one metal plate (9) is driven into opposite side walls (7) of the slot-like recess (6), and anchored, essentially transversely to the longitudinal axis of the recess (6).

16. Method according to either of Claims 14 and 15, in which the at least one transverse wall (9) is formed such that opposite sides of the at least one transverse wall (9) are inclined in relation to one another such that the clusters (13) of bristles seated in adjacent segments (10) have their free ends inclined towards one another.

17. Method according to one of Claims 14 to 16, in which the bristles (3) of each cluster (13) of bristles are bent over in a U-shaped manner, are tufted in the U-shape in the respective segment and are anchored there by an anchor, in particular each cluster (13) of bristles is positioned in an essentially U-shaped manner above the bristle carrier (2) and is anchored in the respective segment (10) by the metal anchor.

18. Method according to one of Claims 14 to 17, in which an end wall (8) of the recess (6) is formed such that it is inclined inwards in the direction of the centre of the recess (6).

19. Method according to one of Claims 14 to 18, in which the clusters (13) of bristles are introduced into the respective segments (10) using a bristle-tufting machine for introducing essentially circular clusters of bristles.

## Revendications

1. Tête de brosse, en particulier tête de brosse à dents, comprenant un support de poils (2) et des poils (3) fixés dessus, le support de poils (2) présentant au moins un évidement (6) de type trou oblong, dans lequel une pluralité de poils sont et forment une touffe de poils (8) étirée en longueur avec un contour extérieur sensiblement fermé et/ou lisse, qui correspond sensiblement au contour de l'évidement (6) de type trou oblong, **caractérisée en ce que** l'évidement (6) de type trou oblong est subdivisé au moyen d'au moins une paroi transversale (9) en plusieurs segments (10), une nervure transversale mince, séparée et ancrée sur le support de poils (2) de préférence en métal étant prévue comme paroi transversale (9), et une touffe de poils (13) séparée étant logée dans chacun des segments (10).

2. Tête de brosse selon la revendication précédente, les poils (3) de chaque touffe de poils (13) séparée étant logés en forme de U dans le segment (17) concerné et étant maintenus par un dispositif d'ancrage fixé dans le segment (10) concerné, en particulier en forme de plaque, qui s'étend entre les branches des poils pliés en U sur leurs tronçons de liaison.

3. Tête de brosse selon la revendication précédente, les dispositifs d'ancrage s'étendant sensiblement transversalement à l'axe longitudinal de l'évidement (6) de type trou oblong, formant de préférence par rapport à la paroi transversale (9) respectivement voisine un angle de moins de 30°.

4. Tête de brosse selon l'une quelconque des revendications précédentes, un fil d'ancrage, en particulier une plaque d'ancrage, étant introduit dans le support de poils (2) comme paroi transversale (9).

5. Tête de brosse selon l'une quelconque des revendications précédentes, la paroi transversale (9) étant ancrée dans des parois latérales (7) opposées de l'évidement (6) de type trou oblong.

6. Tête de brosse selon l'une quelconque des revendications précédentes, la paroi transversale (9) présentant une épaisseur de moins de 0,5 mm, de préférence de moins de 0,4 mm, en particulier dans la plage comprise entre environ 0,15 et 0, 3 mm.

7. Tête de brosse selon l'une quelconque des revendications précédentes, une arête supérieure (15) de la paroi transversale (9) étant arrondie et/ou la paroi transversale (9) présentant une section transversale ovale et/ou elliptique.

8. Tête de brosse selon la revendication 7, des côtés opposés de la au moins une paroi transversale (9) étant inclinés les uns vers les autres, de telle sorte que les touffes de poils (13) reposant dans des segments (10) voisins sont inclinées avec leurs extrémités (14) libres les unes vers les autres.

9. Tête de brosse selon l'une quelconque des revendications précédentes, des parois (8) côté frontal de l'évidement (6), de préférence les segments (10) extérieurs côté frontal correspondants étant disposés globalement inclinés vers l'intérieur en direction du centre de l'évidement (6).

10. Tête de brosse selon l'une quelconque des revendications précédentes, les segments (10) présentant sensiblement la même surface de base.

11. Tête de brosse selon l'une quelconque des revendications 1 à 9, les segments (10) présentant différentes surfaces de base et étant dans un processus de cascade.

12. Tête de brosse selon l'une quelconque des revendications précédentes, les poils avec des propriétés différentes étant logés dans les différents segments (10).

13. Tête de brosse selon l'une quelconque des revendications précédentes, les segments (10) présentant un contour différent d'un cercle, en particulier un contour sensiblement anguleux avec au moins deux côtés parallèles.

14. Procédé pour fabriquer une tête de brosse (1) selon l'une quelconque des revendications précédentes, dans lequel un support de poils (2) est mis à disposition et une pluralité de poils (3) sont fixés sur ce support, au moins un évidement (6) de type trou oblong étant réalisé dans le support de poils et une touffe de poils (8) étirée en longueur avec un contour extérieur lisse et sensiblement fermé étant ancrée à l'intérieur, lequel contour correspond sensiblement au contour de l'évidement (6) de type trou oblong, **caractérisé en ce que** dans l'évidement (6) de type trou oblong est introduite au moins une paroi transversale (9) qui subdivise l'évidement en plusieurs segments (20), une nervure transversale mince de préférence en métal étant utilisée comme paroi transversale (9), et **en ce que** dans chaque segment (10) est introduite une touffe de poils (13) séparée.

15. Procédé selon la revendication 14, dans lequel au moins une plaque métallique (9) est emboîtée respectivement ancrée sensiblement transversalement à l'axe longitudinal de l'évidement (6) de type trou oblong dans des parois latérales (7) opposées de l'évidement (6).

16. Procédé selon l'une quelconque des revendications 14 ou 15, la au moins une paroi transversale (9) étant formée de telle sorte que des côtés opposés de la au moins une paroi transversale (9) sont inclinés les uns vers les autres de telle sorte que les touffes de poils (13) logées dans les segments (10) voisins sont inclinées avec leurs extrémités libres les unes vers les autres.

17. Procédé selon l'une quelconque des revendications 14 à 16, les poils (3) de chaque touffe de poils (13) étant pliés en forme de U, étant bourrés dans la forme en U dans le segment concerné et ancrés à cet endroit avec un dispositif d'ancrage, en particulier chaque touffe de poils (13) étant positionnée sensiblement en forme de U au-dessus du support de poils (2) et étant ancrée avec le dispositif d'ancrage métallique dans le segment (10) concerné.

18. Procédé selon l'une quelconque des revendications 14 à 17, une paroi (8) côté frontal de l'évidement (6) étant formée de telle sorte qu'elle est inclinée vers l'intérieur en direction du centre de l'évidement (6).

19. Procédé selon l'une quelconque des revendications 14 à 18, les touffes de poils (13) étant introduites avec une machine de bourrage de poils pour l'introduction de touffes de poils sensiblement de forme circulaire dans les segments (10) concernés.
